# EUROPEAN PATENT APPLICATION

(11) **EP 4 674 679 A1**
(43) Date of publication of application: **07.01.2026**
(21) Application number: 24186443.8
(22) Date of filing: 04.07.2024
(51) Int. Cl.: B60L 58/40, B60L 7/08, B60L 7/18, B60L 7/22, B60L 58/25, B60L 58/15

(54) **A CONTROL STRATEGY TO ENSURE ELECTRICAL ENERGY PULSE USAGE ABILITY DURING DEMANDING ASCENTS AND DESCENTS**

(71) Applicant: Volvo Truck Corporation, 405 08 Göteborg (SE)
(72) Inventor: BLOMGREN, Fredrik, 425 35 Kärra (SE); HINDI, Gustavo, 449 50 Alafors (SE); HALLBERG, Linus, 423 73 Säve (SE)
(74) Representative: Kransell & Wennborg KB

(57) **Abstract**

A computer system (100) comprising processing circuitry (102) configured to: acquire terrain data (104) of an upcoming power event for a host vehicle (103), calculate a total power (106) required for traveling through the upcoming power event provided a target speed for the host vehicle, calculate, by adjusting a speed parameter (108) for the host vehicle at the upcoming power event, a pulse power (110) and pulse time (111) available in the electrical energy storage system (114) of the host vehicle to assist a speed adjusting device (116) of the host vehicle during the upcoming power event to reach the total power, calculate a recovery time window (118) prior to the upcoming power event that allows the electrical energy storage system (114) to provide the pulse power and pulse time at the upcoming power event with the constraint that a thermal limit of the electrical energy storage system at the end of the upcoming power event is not exceeded, provide an output (120) including the recovery time window, the pulse power, and the pulse time.

## Description

### TECHNICAL FIELD

The disclosure relates generally to electrical energy storage systems. In particular aspects, the disclosure relates to a control strategy to ensure electrical energy pulse usage ability during demanding ascents and descents. The disclosure can be applied to heavy-duty vehicles, such as trucks, buses, and construction equipment, among other vehicle types. Although the disclosure may be described with respect to a particular vehicle, the disclosure is not restricted to any particular vehicle. The disclosure can also be applied to passenger vehicles.

### BACKGROUND

Many electrical energy storage systems have two types of relevant electrical energy storage power pulses limitations: electrochemical and thermal. An electrochemical pulse is typically of very high power and can only last for a very limited time since the high power of the pulse is realized by excess ions on the active material particles. Once these excess ions are consumed in the pulse, the typical high power of an electrochemical pulse is no longer possible until new excess ions have had time to diffuse e.g. to the intercalation positions. This limits the ability for the electrical energy storage system to provide sufficient power during demanding stretches such as ascents and descents.

### SUMMARY

According to a first aspect of the disclosure, there is provided a computer system comprising processing circuitry configured to: acquire terrain data of an upcoming power event for a host vehicle, calculate a total power required for traveling through the upcoming power event provided a target speed for the host vehicle, calculate, by adjusting a speed parameter for the host vehicle at the upcoming power event, a pulse power and pulse time available in the electrical energy storage system of the host vehicle to assist a speed adjusting device of the host vehicle during the upcoming power event to reach the total power, calculate a recovery time window prior to the upcoming power event that allows the electrical energy storage system to provide the pulse power and pulse time at the upcoming power event with the constraint that a thermal limit of the electrical energy storage system at the end of the upcoming power event is not exceeded, and provide an output including the recovery time window, the pulse power, and the pulse time.

The first aspect of the disclosure may seek to prepare the electrical energy storage system for an upcoming increase in demand. That is, the electrical energy storage system is allowed sufficient rest time to enable a pulse power and pulse time sufficient for the upcoming power demand. A technical benefit may include that the upcoming power event can be handled without violating the thermal limits of the electrical energy storage system. The thermal limit is a temperature above which unwanted, rapid degradation of the electrical energy storage system occurs, thus, the degradation of the electrical energy storage system may be slowed down, or stated otherwise the lifetime of the electrical energy storage system is improved.

The calculation of the pulse time and pulse power may be an iterative calculation performed step-wise by adjusting the speed parameter. It is however envisaged that other methods may be used such as including optimizers and machine learning algorithms.

Examples of the disclosure can be used in either a fuel economy mode or a power mode of the vehicle. In fuel economy mode the processing circuitry operating a software that ensures that the electrical energy storage system, ESS, power, or battery power, does not exceed a threshold value before entering a brake event in order to ensure that the electrical energy storage system brake power is high enough to recover the energy of a downhill slope. In power mode the processing circuitry operating a software ensures that the electrical energy storage system power does not exceed a threshold value before entering an ascent in order for the electrical energy storage system propulsion power to be high enough to achieve a certain rated vehicle power.

The threshold ESS power value is lower than the power at the thermal limit. Both the power at the thermal limit and the threshold ESS power value may be pre-determined by experimental data.

One way to ensure that the pulse power in power mode is available, is to ensure that the ESS power never exceeds a fixed threshold which is set on forehand by degradation experiments for instance.

Optionally in some examples, including in at least one preferred example, the speed adjusting device is a fuel cell system that provides propulsion power to the host vehicle, and the upcoming power event is an ascent event whereby the total power is the ascent power required to climb the ascent event. A technical benefit may include the ability to prepare the electrical energy storage system for an ascent such that a degradation rate during the ascent is reduced. That is, by using look ahead information of the upcoming ascent, the recovery time window is calculated such that ascent can be handled with minimum degradation of the electrical energy storage system. The system can thus avoid exceeding thermal limits of the electrical energy storage system by balancing the power load between the fuel cell and the battery. This prevents rapid degradation of the electrical energy storage system due to overheating, thereby maintaining its health and longevity.

Optionally in some examples, including in at least one preferred example, the processing circuitry may be further configured to: calculate the ascent power based on an inclination of the ascent event derived from the terrain data, a present vehicle weight, and the target speed, determine that the ascent power exceeds the accumulated available fuel cell system power and available continuous electrical energy storage system power, wherein to calculate the pulse power and pulse time includes an iterative calculation comprising: a) calculate an updated ascent power based on the inclination of the ascent event, the present vehicle weight, and an ascent speed below the target speed, b) calculate the pulse power as the difference between the updated ascent power and the available fuel cell system power, c) calculate the ascent time based on an ascent length derived from the terrain data and the updated ascent speed, d) compare a present available energy in the electrical energy storage system with the energy required to provide the pulse power for the duration of the ascent time, e) repeat steps a-d with reduced updated ascent speed until the present available energy in the electrical energy storage system is equal to or exceeds the energy required to provide the pulse power for the duration of the ascent time, output the pulse power, and the ascent time as the pulse time. A technical benefit may include that an efficient algorithm for calculating the pulse power, and the ascent time as the pulse time is provided. Thus, the iterative process allows for precise calculation of the power required from both the fuel cell and the electrical energy storage system. This ensures that the vehicle has enough power to complete the ascent without exceeding the available thermal limits of the electrical energy storage system.

Optionally in some examples, including in at least one preferred example, the processing circuitry may be further configured to: evaluate whether the ascent power exceeds an accumulated maximum available fuel cell system power and an available continuous electrical energy storage system power, and only perform the iterative calculation when the ascent power exceeds the accumulated available fuel cell system power and the available continuous electrical energy storage system power. By evaluating the available power from both the fuel cell system and the electrical energy storage system before starting the iterative calculations, the system ensures that it only engages in complex computations when necessary. That is, it is ensured that the system only performs the detailed iterative calculations when the combined available power of the fuel cell and the electrical energy storage system is insufficient for the ascent. This saves computational resources and time.

Optionally in some examples, including in at least one preferred example, the speed adjusting device may be an auxiliary brake device that provides auxiliary brake capacity to the host vehicle, and the upcoming power event is a descent event whereby the total power is the vehicle brake power required to maintain the target speed during the upcoming descent. A technical benefit may include the ability to prepare the electrical energy storage system for a descent such that a degradation rate during the descent is reduced. That is, by using look ahead information of the upcoming descent, the recovery time window is calculated such that the descent can be handled with minimum degradation of the electrical energy storage system. The system can thus avoid exceeding thermal limits of the electrical energy storage system by balancing the power load between the auxiliary brake device and the electrical energy storage system. This prevents rapid degradation of the electrical energy storage system due to overheating, thereby maintaining its health and longevity.

Optionally in some examples, including in at least one preferred example, the processing circuitry may be further configured to: calculate the vehicle brake power based on an inclination of the descent event derived from the terrain data, a present vehicle weight, and the target speed, determine that the vehicle brake power exceeds a vehicle rated brake power, wherein the vehicle rated brake power is used as target brake power, wherein to calculate the pulse power and pulse time includes an iterative calculation comprising: a) calculate a descent time based on the descent length and an updated descent speed below the target speed, b) calculate a pulse power based on an estimated available energy difference in the electrical energy storage device between start of the descent and end of the descent, and the descent time, c) calculate a needed auxiliary brake power based on a difference between the target brake power and the pulse power, d) compare the calculated needed auxiliary brake power with the auxiliary brake capacity, e) repeat steps a-d with reduced updated descent speed until the needed auxiliary brake power does not exceed the auxiliary brake capacity, output the pulse power, and the descent time as the pulse time. A technical benefit may include that an efficient algorithm for calculating the pulse power, and the descent time as the pulse time is provided. Thus, the iterative process allows for precise calculation of the power required from both the auxiliary brake device and the electrical energy storage system. This ensures that the vehicle has enough power to complete the descent without exceeding the available thermal limits of the electrical energy storage system.

Optionally in some examples, including in at least one preferred example, wherein to calculate the needed auxiliary brake power may further include adding a fuel cell idle power presently available. A technical advantage includes that by taking also the idle power into account a more accurate pulse power and pulse time can be calculated.

Optionally in some examples, including in at least one preferred example, the target speed may be the legal speed limit at the upcoming power event. Thus, the calculations further ensures that legal speed limits are not violated.

There is further provided a vehicle comprising the computer system.

According to a second aspect of the disclosure, there is provided a computer-implemented method, comprising: acquiring, by processing circuitry of a computer system, terrain data of an upcoming power event for a host vehicle, calculating, by the processing circuitry, a total power required for traveling through the upcoming power event provided a target speed for the host vehicle, calculating, by the processing circuitry, by adjusting a speed parameter for the host vehicle at the upcoming power event, a pulse power and pulse time available in the electrical energy storage system of the host vehicle to assist a speed adjusting device of the host vehicle during the upcoming power event to reach the total power, calculating, by the processing circuitry, a recovery time window prior to the upcoming power event that allows the electrical energy storage system to provide the pulse power and pulse time at the upcoming power event with the constraint that a thermal limit of the electrical energy storage system at the end of the upcoming power event is not exceeded, providing, by the processing circuitry, an output including the recovery time window, the pulse power, and the pulse time.

The second aspect of the disclosure may seek to prepare the electrical energy storage system for an upcoming increase in demand. That is, the electrical energy storage system is allowed sufficient rest time to enable a pulse power and pulse time sufficient for the upcoming power demand. A technical benefit may include that the upcoming power event can be handled without violating the thermal limits of the electrical energy storage system. The thermal limit is a temperature above which unwanted, rapid degradation of the electrical energy storage system occurs, thus, the degradation of the electrical energy storage system may be slowed down, or stated otherwise the lifetime of the electrical energy storage system is improved.

Optionally in some examples, including in at least one preferred example, the speed adjusting device may be a fuel cell system that provides propulsion power to the host vehicle, and the upcoming power event is an ascent event whereby the total power is the ascent power required to climb the ascent event. A technical benefit may include the ability to prepare the electrical energy storage system for an ascent such that a degradation rate during the ascent is reduced. That is, by using look ahead information of the upcoming ascent, the recovery time window is calculated such that ascent can be handled with minimum degradation of the electrical energy storage system. The system can thus avoid exceeding thermal limits of the electrical energy storage system by balancing the power load between the fuel cell and the battery. This prevents rapid degradation of the electrical energy storage system due to overheating, thereby maintaining its health and longevity.

Optionally in some examples, including in at least one preferred example, the method may further comprise further comprising: calculating, by the processing circuitry, the ascent power based on an inclination of the ascent event derived from the terrain data, a present vehicle weight, and the target speed, determining, by the processing circuitry, that the ascent power exceeds the accumulated available fuel cell system power and available continuous electrical energy storage system power, wherein to calculate the pulse power and pulse time includes an iterative calculation comprising: a) calculating, by the processing circuitry, an updated ascent power based on the inclination of the ascent event, the present vehicle weight, and an ascent speed below the target speed, b) calculating, by the processing circuitry, the pulse power as the difference between the updated ascent power and the available fuel cell system power, c) calculating, by the processing circuitry, the ascent time based on an ascent length derived from the terrain data and the updated ascent speed, d) comparing, by the processing circuitry, a present available energy in the electrical energy storage system with the energy required to provide the pulse power for the duration of the ascent time, e) repeating, by the processing circuitry, steps a-d with reduced updated ascent speed until the present available energy in the electrical energy storage system is equal to or exceeds the energy required to provide the pulse power for the duration of the ascent time, outputting, by the processing circuitry, the pulse power, and the ascent time as the pulse time. A technical benefit may include that an efficient algorithm for calculating the pulse power, and the ascent time as the pulse time is provided. Thus, the iterative process allows for precise calculation of the power required from both the fuel cell and the electrical energy storage system. This ensures that the vehicle has enough power to complete the ascent without exceeding the available thermal limits of the electrical energy storage system.

Optionally in some examples, including in at least one preferred example, the method may further comprise: evaluating, by the processing circuitry, whether the ascent power exceeds the accumulated maximum available fuel cell system power and available continuous electrical energy storage system power, and only perform the iterative calculation when the ascent power exceeds the accumulated available fuel cell system power and available continuous electrical energy storage system power. By evaluating the available power from both the fuel cell system and the electrical energy storage system before starting the iterative calculations, the system ensures that it only engages in complex computations when necessary. That is, it is ensured that the system only performs the detailed iterative calculations when the combined available power of the fuel cell and the electrical energy storage system is insufficient for the ascent. This saves computational resources and time.

Optionally in some examples, including in at least one preferred example, the speed adjusting device may be an auxiliary brake device that provides auxiliary brake capacity to the host vehicle, and the upcoming power event is a descent event whereby the total power is the vehicle brake power required to maintain the target speed during the upcoming descent. A technical benefit may include the ability to prepare the electrical energy storage system for a descent such that a degradation rate during the descent is reduced. That is, by using look ahead information of the upcoming descent, the recovery time window is calculated such that the descent can be handled with minimum degradation of the electrical energy storage system. The system can thus avoid exceeding thermal limits of the electrical energy storage system by balancing the power load between the auxiliary brake device and the electrical energy storage system. This prevents rapid degradation of the electrical energy storage system due to overheating, thereby maintaining its health and longevity.

Optionally in some examples, including in at least one preferred example, the method may further comprise: calculating, by the processing circuitry, the vehicle brake power based on an inclination of the descent event derived from the terrain data, a present vehicle weight, and the target speed, determining, by the processing circuitry, that the calculated vehicle brake power exceeds a vehicle rated brake power, wherein the vehicle rated brake power is used as target brake power, wherein to calculate the pulse power and pulse time includes an iterative calculation comprising: a) calculating, by the processing circuitry, a descent time based on the descent length and an updated descent speed below the target speed, b) calculating, by the processing circuitry, a pulse power based on an estimated available energy difference in the electrical energy storage device between start of the descent and end of the descent, and the descent time, c) calculating, by the processing circuitry, a needed auxiliary brake power based on a difference between the target brake power and the pulse power, d) comparing, by the processing circuitry, the calculated needed auxiliary brake power with the auxiliary brake capacity, e) repeating, by the processing circuitry, steps a-d with reduced updated descent speed until the needed auxiliary brake power does not exceed the auxiliary brake capacity, outputting, by the processing circuitry, the pulse power, and the descent time as the pulse time. A technical benefit may include that an efficient algorithm for calculating the pulse power, and the descent time as the pulse time is provided. Thus, the iterative process allows for precise calculation of the power required from both the auxiliary brake device and the electrical energy storage system. This ensures that the vehicle has enough power to complete the descent without exceeding the available thermal limits of the electrical energy storage system.

Optionally in some examples, including in at least one preferred example, wherein to calculate the needed auxiliary brake power may further includes adding a fuel cell idle power presently available. A technical advantage includes that by taking also the idle power into account a more accurate pulse power and pulse time can be calculated.

Optionally in some examples, including in at least one preferred example, the target speed may be the legal speed limit at the upcoming power event. Thus, the calculations further ensures that legal speed limits are not violated.

Optionally in some examples, including in at least one preferred example, the thermal limit is a temperature selected above which unwanted rapid degradation of the electrical energy storage system occurs.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary system diagram of a computer system according to an example.
**FIG. 2** is a graph that illustrates the available pulse power and pulse duration as a function of the ESS condition when entering into a power event.
**FIG. 3** is a flow chart of steps of an example method for preparing an ESS for an upcoming power event.
**FIG. 4A** illustrates a vehicle travelling towards an upcoming power event in the form of an ascent event.
**FIG. 4B** illustrates a vehicle travelling towards an upcoming power event in the form of a descent event.
**FIG. 5** is a flow chart of method steps to prepare the ESS for the ascent event according to an example.
**FIG. 6** is a flow chart of method steps to prepare the ESS for the decent event according to an example.
**FIG. 7** is another view of **FIG. 1****,** according to an example.
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Electrical energy storages, such as batteries, degrade quicker if thermal limits are not respected. Due to the thermal limits the power that a battery can deliver is limited. This can cause situations where the battery of an electrified vehicle cannot provide the demanded power which can be problematic in for example uphill scenarios.

The current disclosure therefore suggests a control strategy to prepare the electrical energy storage system for an upcoming event in which a pulse power is to be used. Preparation of the electrical energy storage system means limits the output power during a time window before the event during which the pulse power is to be used.

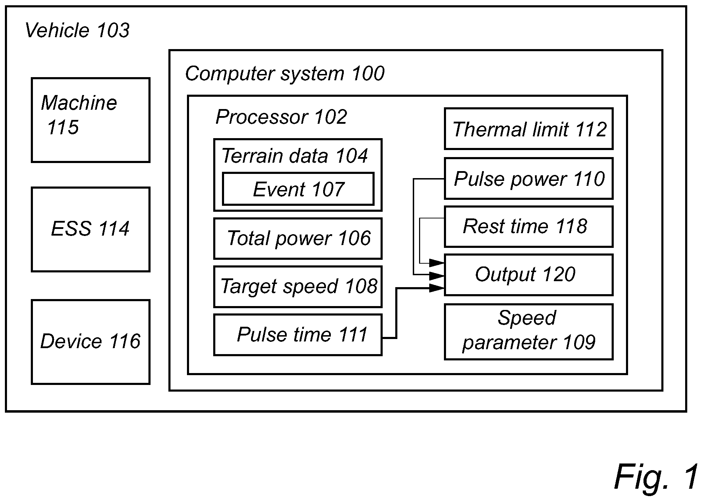

**FIG. 1** is an exemplary system diagram of a computer system 100 according to an example. The computer system 100 comprises processing circuitry 102 configured to perform various steps examples disclosed herein.

The processing circuitry 102 has access to terrain data 104 of upcoming power events 107 for a host vehicle 103. The terrain data includes information about upcoming slopes, such as inclination and length of inclined road sections. The terrain may be described as inclining planes in a simple form but may in other implementations be more detailed such as data from a global positioning system, GPS, where altitude and road topography may be included.

The processing circuitry 102 can calculate a total power 106 required for traveling through the upcoming power event provided a target speed 108 for the host vehicle. The target speed 108 may be the legal speed limit for the road section at the upcoming power event. The legal speed limit may be included in GPS data but may also be read from road signs using a camera.

The processing circuitry 102 can calculate, preferably iteratively or by using e.g., optimizers or machine learning methods, by adjusting a speed parameter 109 for the host vehicle 103 at the upcoming power event 107, a pulse power 110 and pulse time 111 available in the electrical energy storage system, ESS, 114 of the host vehicle 103 to assist a speed adjusting device 116 of the host vehicle 103 during the upcoming power event 107 to reach the total power 106. In other words, the processing circuitry 102 adjusts a speed parameter 108 in its algorithm until the available power window in the ESS 114 is sufficient to assist the speed adjusting device 116 of the host vehicle 103 during the upcoming power event 107 to provide the total power 106.

Once the pulse power 110 and pulse time 111 have been calculated, the processing circuitry 102 calculates a recovery time window 118, or resting time, that should occur prior to the upcoming power event 107. The recovery time window 118 is sufficiently long that the electrical energy storage system 114 can provide the calculated pulse power 110 and pulse time 111 once the upcoming power event has been reached. The constraint is that a thermal limit 112 of the electrical energy storage system 114 at the end of the upcoming power event 107 is not exceeded. The thermal limit 112 is a temperature selected above which unwanted rapid degradation of the electrical energy storage system 114 occurs.

The processing circuitry 102 provides an output 120 that indicates the recovery time window 118, the pulse power 110, and the pulse time 111. In other words, the output states for how long time the electrical energy storage system 114 needs to rest in order to provide the pulse power 110, and the pulse time 111 at the upcoming power event 107. The output may be provided to a control circuit electrical energy storage system 114 that controls the output and resting times of the electrical energy storage system 114.

The electrical energy storage system 114 is configured to power an electric machine such as an electric motor to provide propulsion power to the vehicle. That is, the electrical energy storage system 114 may be arranged to provide a traction power to the vehicle 103.

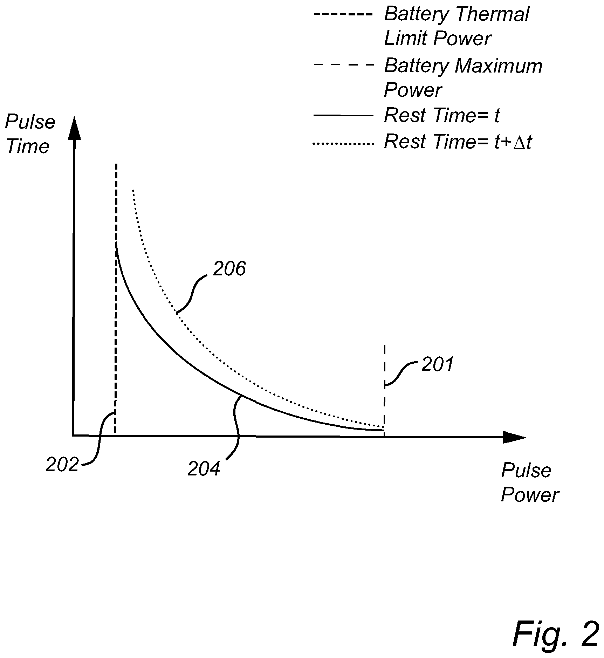

**FIG. 2** is a graph that illustrates the available pulse power and pulse duration as a function of the ESS condition when entering into the power event.

Regardless of conditions entering a pulse event, there is a maximum ESS power 201 set by e.g. the chemistry in the ESS cells or the circuits and fuses of the ESS.

The ESS thermal limit power 202 is the continuous power available for steady state operation. This limit 202 indicates the highest power at which the generated heat from the ESS can be transferred to a coolant and dispersed to ambient in a cooling system. At any higher power the heat generated is higher than what can be dissipated out from the ESS without surpassing the allowed electrical energy storage cell temperature.

The solid curve 204 shows the pulse power and pulse duration when the ESS has rested for a certain resting time period t, i.e. the power has been less than or equal to a threshold value for said time period t. This threshold power value must be lower than ESS thermal limit power 202.

The dashed curve 206 shows the available pulse power and duration when the ESS has been operated at the threshold power or lower for a longer time period t + Δt, with Δt being positive.

In other words, the longer the rest period, the curve shifts up releasing more pulse power or pulse time provided a given thermal limit.

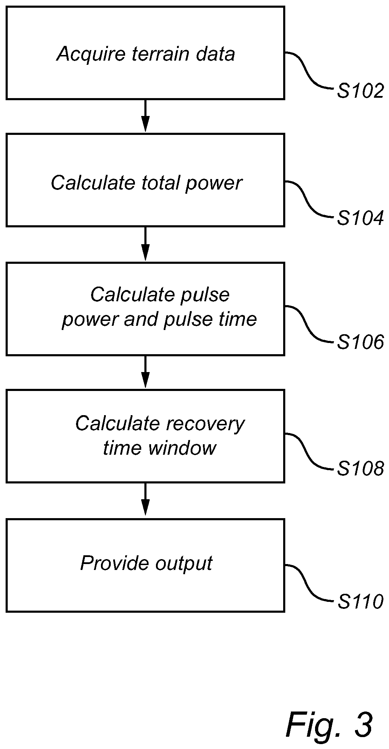

**FIG. 3** is a flow chart of steps of an example method for preparing an ESS 114 for an upcoming power event 107.

In step S 102, acquiring, by processing circuitry 102 of a computer system 100, terrain data of an upcoming power event for a host vehicle.

In step S104, calculating, by the processing circuitry 102, a total power 106 required for traveling through the upcoming power event 107 provided a target speed 108 for the host vehicle 103.

In step S106, calculating, by the processing circuitry 103, iteratively by adjusting a speed parameter 109 for the host vehicle 103 at the upcoming power event 107, a pulse power 110 and pulse time 111 available in the electrical energy storage system 114 of the host vehicle 103 to assist a speed adjusting device 116 of the host vehicle 103 during the upcoming power event 107 to reach the total power 106.

In step S 108 calculating, by the processing circuitry 102, a recovery time window 118 prior to the upcoming power event that allows the electrical energy storage system to provide the pulse power 110 and pulse time 111 at the upcoming power event with the constraint that a thermal limit 112 of the electrical energy storage system 114 at the end of the upcoming power event 107 is not exceeded.

In step S 110, providing, by the processing circuitry 102, an output 120 including the recovery time window 118, the pulse power 110, and the pulse time 111.

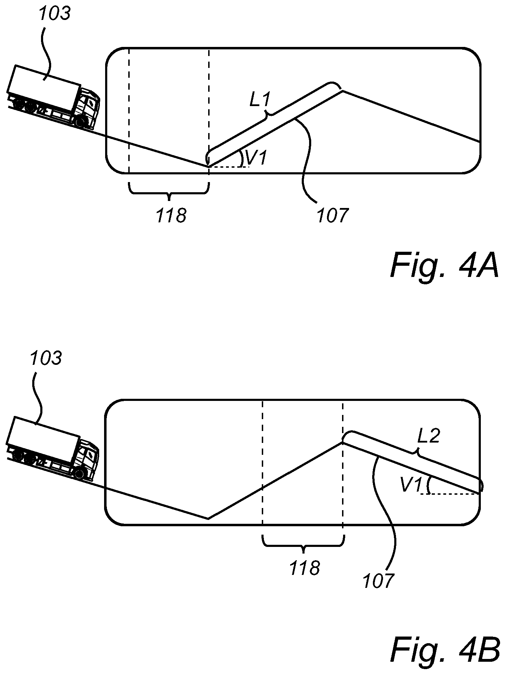

**FIG. 4A** illustrates a vehicle 103 travelling towards an upcoming power event in the form of an ascent event 107. The speed adjusting device 116 is a fuel cell system 116 that provides propulsion power to the host vehicle 103 along with the ESS 114. Information about the ascent event 107, such as length L1 and inclination V1 can be extracted from the terrain data 105. The total power is the ascent power 106 required to climb the ascent event 107.

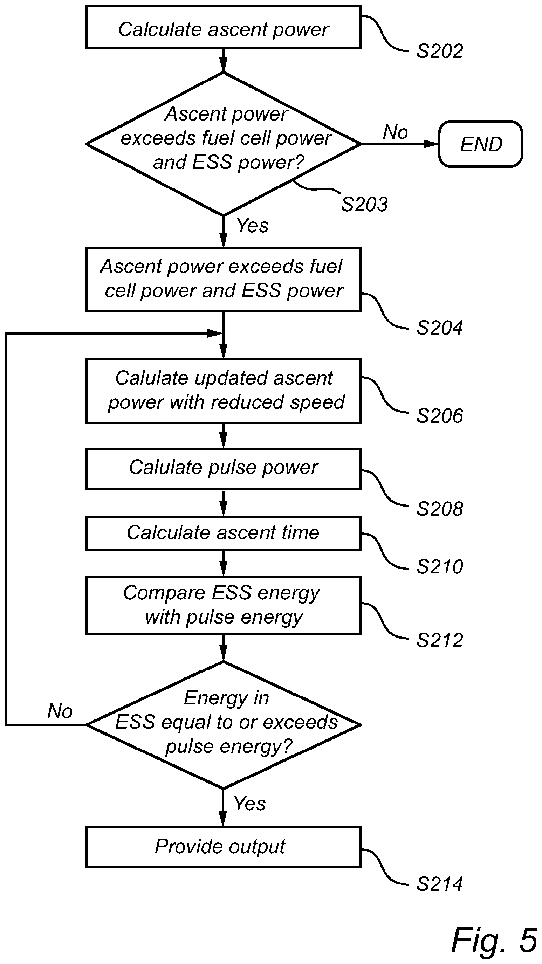

**FIG. 5** is a flow chart of method steps to prepare the ESS for the ascent event 107. Preceding the steps of fig. 5, a driver or vehicle system may have selected a power mode for the vehicle. In power mode the processing circuitry ensures that the ESS power does not exceed a threshold value before entering an ascent in order for the ESS propulsion power to be high enough to achieve a certain rated vehicle power.

In step S202, the processing circuitry 102 calculates the ascent power 106 based on the inclination V of the ascent event 107 derived from the terrain data 105, a present vehicle weight, and the target speed 108. That is, the processing circuitry 102 calculates the power required to take the vehicle the distance L1 up the ascent with inclination V1 at the target speed 108.

The processing circuitry 102 evaluates, in step S203, whether the ascent power exceeds the accumulated maximum available fuel cell system power and available continuous electrical energy storage system power. That is, the processing circuitry 102 has pre-stored data or access to acquire information concerning the available fuel cell system power and the available continuous electrical energy storage system power 202. If the available fuel cell system power alone is equal to or exceeds the ascent power, no power pulse is needed the fuel cell system can propel the vehicle 103 without ESS assistance.

Further, if the sum of the available fuel cell system power and the available continuous electrical energy storage system power is equal to or exceeds the ascent power, no pulse power is needed.

In step S204, the processing circuitry determines that the ascent power 106 exceeds the accumulated available fuel cell system 116 power and available continuous electrical energy storage system power 202. This means that the power provided by the fuel cell and the ESS 114 jointly is not sufficient for climbing the ascent 107 at the target speed 108. The following steps to perform the iterative calculation is only performed when the ascent power exceeds the accumulated available fuel cell system power and available continuous electrical energy storage system power, otherwise the method is ended.

The iterative calculation includes the following steps S206-S212.

In step S206, calculate, by the processing circuitry, an updated ascent power based on the inclination of the ascent event, the present vehicle weight, and an ascent speed below the target speed. That is, a reduced ascent speed below the initial target speed is selected which will reduce the accept power required for climbing the ascent. The reduction in speed may be performed in predetermined steps of one or a few units, e.g., km/h or mph.

In step S208, calculating, by the processing circuitry 102, the pulse power 110 as the difference between the updated ascent power and the available fuel cell system power. That is, the pulse power 110 is the power required as an addition to the available fuel cell system power in order to reach the updated ascent power.

In step S210, calculating, by the processing circuitry 102, the ascent time based on an ascent length L derived from the terrain data 105 and the updated ascent speed. The ascent time is the pulse time in the present iteration.

In step S212, comparing, by the processing circuitry 102, a present available energy in the electrical energy storage system 114 with the energy required to provide the pulse power for the duration of the ascent time. The pulse power multiplied with the ascent time is the pulse energy which can be compared to the available energy in the ESS 114.

If the present available energy in the electrical energy storage system is equal to or exceeds the energy required to provide the pulse power for the duration of the ascent time, the output 120 is provided in step S 114 by the processing circuitry 102. If not, the steps S206-S212 are repeated with reduced updated ascent speed in each iteration until the present available energy in the electrical energy storage system is equal to or exceeds the energy required to provide the pulse power for the duration of the ascent time.

The output 120 includes data of the pulse power, and the ascent time as the pulse time, and the calculated recover time window 118 during which a reduced maximum output power is allowed to ensure that once the power pulse is output the thermal limits of the ESS are not exceeded.

The processing circuitry 102 can determine when to reduce the ESS power output to allow for the recovery time window based on the present speed and the distance to the upcoming power event 107.

The recovery time window 118 can be calculated by mathematical formulas derived based on available pulse power and pulse duration data shown in fig. 2, or based on predetermined curves for different recovery times t. The calculated pulse power and pulse duration represents a point in the graph of fig. 2, and the recovery time window is given by which ever curve goes through that point, or which curve is the nearest. That is, multiple curves, such as the example curves 202 and 204, of pulse power versus pulse duration for multiple recovery times may be prepared and the one which best matches the calculated pulse power and pulse duration gives the recovery time window. As mentioned above, the graph representation of finding the recovery time window for a given pulse power and pulse duration may be represented by mathematical formulas.

**FIG. 4B** illustrates a vehicle 103 travelling towards an upcoming power event in the form of a descent event 107. The speed adjusting device 116 auxiliary brake device 116 that provides auxiliary brake capacity to the host vehicle 103. Information about the descent event 107, such as length L2 and inclination V2 can be extracted from the terrain data 105. The total power is the vehicle brake power 106 required to maintain the target speed 108 during the upcoming descent 107.

An auxiliary brake device 116 may comprise a load, such as a resistor, that allows for driving an electric motor of the vehicle in an opposite direction such as to provide a braking power to the vehicle. The resistor is used for dissipating the energy from the electric motor.

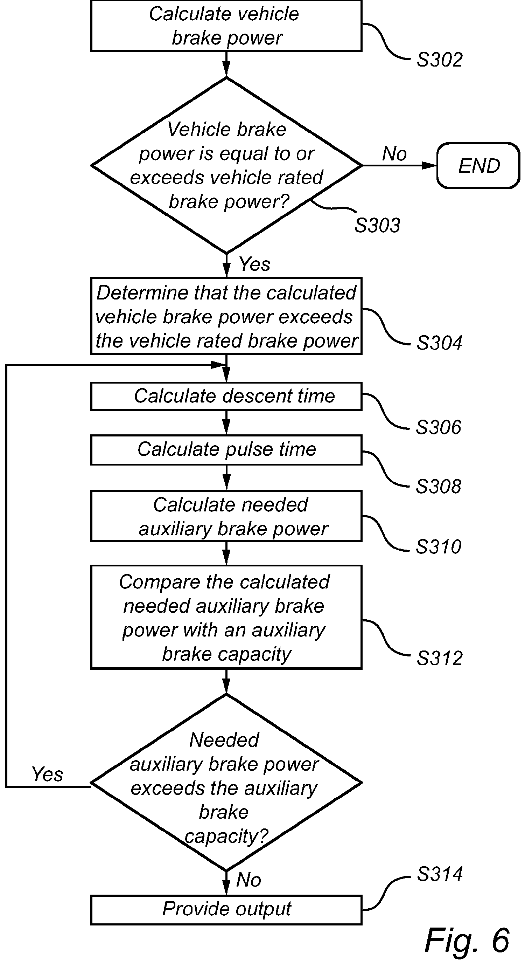

**FIG. 6** is a flow chart of method steps to prepare the ESS 114 for the descent event 107. Preceding the steps of fig. 6, a driver or vehicle system may have selected a fuel economy mode for the vehicle. In fuel economy mode the processing circuitry ensures that the ESS power does not exceed a threshold value before entering a brake event in order to ensure that the ESS brake power is high enough to recover the energy of a downhill slope.

In step S302, calculating, by the processing circuitry 102, the vehicle brake power based on an inclination of the descent event 107 derived from the terrain data 104, a present vehicle weight, and the target speed 108. The processing circuitry 102 evaluates whether the vehicle brake power 106 exceeds a vehicle rated brake power. If the outcome is no, no speed adjustment is required, and the method is ended since no power pulse from the ESS is required.

However, in the case of a positive outcome, determining in step S304, by the processing circuitry 102, that the calculated vehicle brake power exceeds the vehicle rated brake power. The vehicle rated brake power is used as target brake power.

To calculate the descent speed iteratively includes the steps S306-S312.

In step S306, calculating, by the processing circuitry 102, a descent time based on the descent length L2 and an updated descent speed below the target speed 108. That is, the descent time is calculated by dividing the descent length by the updated descent speed.

In step S308, calculating, by the processing circuitry 102, a pulse power based on an estimated available energy difference in the electrical energy storage device 114 between start of the descent and end of the descent, and the descent time. The available energy difference can be provided path a route or mission planning system of the vehicle 103 which are typically available in the vehicles. For example, path planning systems typically indicate state of charge of the ESS 114 at start and at end of a route.

In step S310, calculating, by the processing circuitry 102, a needed auxiliary brake power based on a difference between the target brake power and the pulse power that the ESS can use as brake power. The pulse power can thus be considered an ESS brake power. In other words, the processing circuitry 102 calculates how much assisting brake power is needed in order ensure that the target speed is not exceeded in the descent event 107.

In step S312, comparing, by the processing circuitry 312, the calculated needed auxiliary brake power with an auxiliary brake capacity. The auxiliary brake capacity is the available brake power that the auxiliary brake can assist with.

If the needed auxiliary brake power does not exceed the auxiliary brake capacity, the processing circuitry 102 outputs, in step S314 the pulse power, and the descent time as the pulse time.

If the needed auxiliary brake power is equal to or exceeds the auxiliary brake capacity, steps S306-S312 are repeated stepwise with reduced updated descent speed until the needed auxiliary brake power does not exceed the auxiliary brake capacity. The reduction in descent speed may be in steps of one or a few units in km/h or mph.

In vehicles with fuel cell systems, a fuel cell idle power is typically present which adds to the target brake power. That it, the needed auxiliary brake power = Target brake power + Fuel cell idle power - ESS brake power. To calculate the needed auxiliary brake power may thus further include adding the fuel cell idle power presently available.

In some examples are ambient conditions such as temperature that affects the power ability of the fuel cell system taken into account when determining the available fuel cell system power.

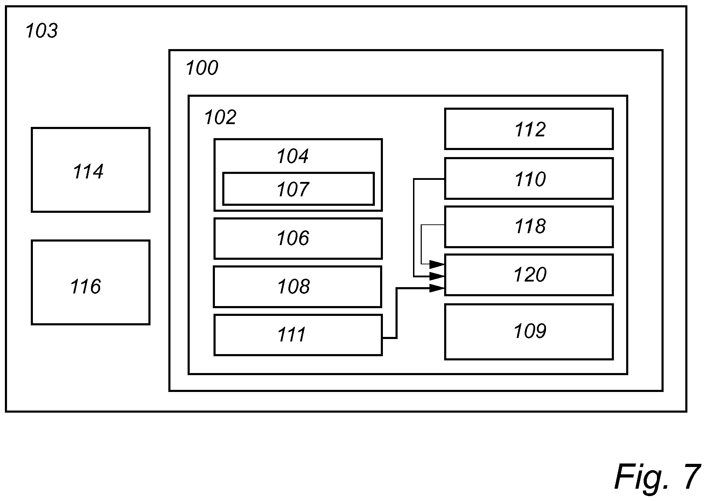

**FIG. 7** is another view of **FIG. 1****,** according to an example.

Fig. 7 illustrates a computer system 100 comprising processing circuitry 102 configured to: acquire terrain data 104 of an upcoming power event 107 for a host vehicle 103, calculate a total power 106 required for traveling through the upcoming power event provided a target speed for the host vehicle, calculate, iteratively by adjusting a speed parameter 108 for the host vehicle at the upcoming power event, a pulse power 110 and pulse time 111 available in the electrical energy storage system 114 of the host vehicle to assist a speed adjusting device 116 of the host vehicle during the upcoming power event to reach the total power, calculate a recovery time window 118 prior to the upcoming power event that allows the electrical energy storage system 114 to provide the pulse power and pulse time at the upcoming power event with the constraint that a thermal limit of the electrical energy storage system at the end of the upcoming power event is not exceeded, provide an output 120 including the recovery time window 118, the pulse power 110, and the pulse time 111.

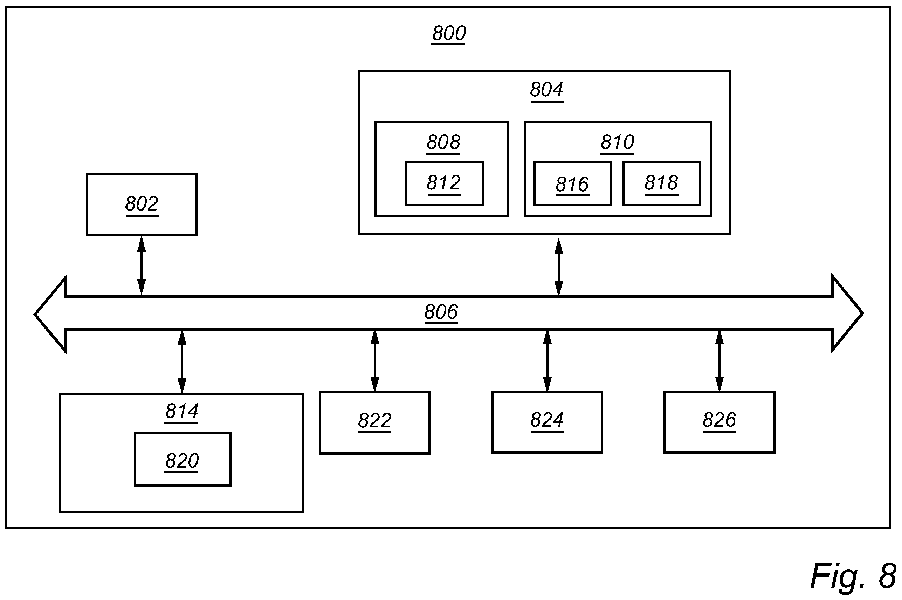

**FIG. 8** is a schematic diagram of a computer system **800** for implementing examples disclosed herein. The computer system **800** is adapted to execute instructions from a computer-readable medium to perform these and/or any of the functions or processing described herein. The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804,** and a system bus **806.** The computer system **800** may include at least one computing device having the processing circuitry **802.** The system bus **806** provides an interface for system components including, but not limited to, the memory **804** and the processing circuitry **802.** The processing circuitry **802** may include any number of hardware components for conducting data or signal processing or for executing computer code stored in memory **804.** The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802.** A basic input/output system (BIOS) **812** may be stored in the non-volatile memory **808** and can include the basic routines that help to transfer information between elements within the computer system **800.**

The computer system **800** may further include or be coupled to a non-transitory computer-readable storage medium such as the storage device **814,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810,** which may include an operating system **816** and/or one or more program modules **818.** All or a portion of the examples disclosed herein may be implemented as a computer program **820** stored on a transitory or non-transitory computer-usable or computer-readable storage medium (e.g., single medium or multiple media), such as the storage device **814,** which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802.** In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802.** The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device
interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to: acquire terrain data of an upcoming power event for a host vehicle, calculate a total power required for traveling through the upcoming power event provided a target speed for the host vehicle, calculate, iteratively by adjusting a speed parameter for the host vehicle at the upcoming power event, a pulse power and pulse time available in the electrical energy storage system of the host vehicle to assist a speed adjusting device of the host vehicle during the upcoming power event to reach the total power, calculate a recovery time window prior to the upcoming power event that allows the electrical energy storage system to provide the pulse power and pulse time at the upcoming power event with the constraint that a thermal limit of the electrical energy storage system at the end of the upcoming power event is not exceeded, provide an output including the recovery time window, the pulse power, and the pulse time.

Example 2: The computer system of example 1, wherein the speed adjusting device is a fuel cell system that provides propulsion power to the host vehicle, and the upcoming power event is an ascent event whereby the total power is the ascent power required to climb the ascent event.

Example 3: The computer system of example 2, wherein the processing circuitry is further configured to: calculate the ascent power based on an inclination of the ascent event derived from the terrain data, a present vehicle weight, and the target speed, determine that the ascent power exceeds the accumulated available fuel cell system power and available continuous electrical energy storage system power, wherein to calculate iteratively includes a) calculate an updated ascent power based on the inclination of the ascent event, the present vehicle weight, and an ascent speed below the target speed, b) calculate the pulse power as the difference between the updated ascent power and the available fuel cell system power, c) calculate the ascent time based on an ascent length derived from the terrain data and the updated ascent speed, d) compare a present available energy in the electrical energy storage system with the energy required to provide the pulse power for the duration of the ascent time, e) repeat steps a-d with reduced updated ascent speed until the present available energy in the electrical energy storage system is equal to or exceeds the energy required to provide the pulse power for the duration of the ascent time, output the pulse power, and the ascent time as the pulse time.

Example 4: The computer system of example 3, wherein the processing circuitry is further configured to: evaluate whether the ascent power exceeds the accumulated maximum available fuel cell system power and available continuous electrical energy storage system power, and only perform the iterative calculation when the ascent power exceeds the accumulated available fuel cell system power and available continuous electrical energy storage system power.

Example 5: The computer system of any of examples 1-3, wherein the speed adjusting device is an auxiliary brake device that provides auxiliary brake capacity to the host vehicle, and the upcoming power event is a descent event whereby the total power is the vehicle brake power required to maintain the target speed during the upcoming descent.

Example 6: The computer system of example 5, wherein the processing circuitry is further configured to: calculate the vehicle brake power based on an inclination of the descent event derived from the terrain data, a present vehicle weight, and the target speed, determine that the vehicle brake power exceeds a vehicle rated brake power, wherein the vehicle rated brake power is used as target brake power, and to calculate iteratively includes: a) calculate a descent time based on the descent length and an updated descent speed below the target speed, b) calculate a pulse power based on an estimated available energy difference in the electrical energy storage device between start of the descent and end of the descent, and the descent time, c) calculate a needed auxiliary brake power based on a difference between the target brake power and the pulse power, d) compare the calculated needed auxiliary brake power with the auxiliary brake capacity, e) repeat steps a-d with reduced updated descent speed until the needed auxiliary brake power does not exceed the auxiliary brake capacity, output the pulse power, and the descent time as the pulse time.

Example 7: The computer system of example 6, wherein to calculate the needed auxiliary brake power further includes adding a fuel cell idle power presently available.

Example 8: The computer system of any of examples 1-7, wherein the target speed is the legal speed limit at the upcoming power event.

Example 9: A vehicle comprising the computer system of any of examples 1-8.

Example 10: A computer-implemented method, comprising: acquiring, by processing circuitry of a computer system, terrain data of an upcoming power event for a host vehicle, calculating, by the processing circuitry, a total power required for traveling through the upcoming power event provided a target speed for the host vehicle, calculating, by the processing circuitry, iteratively by adjusting a speed parameter for the host vehicle at the upcoming power event, a pulse power and pulse time available in the electrical energy storage system of the host vehicle to assist a speed adjusting device of the host vehicle during the upcoming power event to reach the total power, calculating, by the processing circuitry, a recovery time window prior to the upcoming power event that allows the electrical energy storage system to provide the pulse power and pulse time at the upcoming power event with the constraint that a thermal limit of the electrical energy storage system at the end of the upcoming power event is not exceeded, providing, by the processing circuitry, an output including the recovery time window, the pulse power, and the pulse time.

Example 11: The method of example 10, wherein the speed adjusting device is a fuel cell system that provides propulsion power to the host vehicle, and the upcoming power event is an ascent event whereby the total power is the ascent power required to climb the ascent event.

Example 12: The method of example 11, further comprising: calculating, by the processing circuitry, the ascent power based on an inclination of the ascent event derived from the terrain data, a present vehicle weight, and the target speed, determining, by the processing circuitry, that the ascent power exceeds the accumulated available fuel cell system power and available continuous electrical energy storage system power, wherein to calculate iteratively includes: a) calculating, by the processing circuitry, an updated ascent power based on the inclination of the ascent event, the present vehicle weight, and an ascent speed below the target speed, b) calculating, by the processing circuitry, the pulse power as the difference between the updated ascent power and the available fuel cell system power, c) calculating, by the processing circuitry, the ascent time based on an ascent length derived from the terrain data and the updated ascent speed, d) comparing, by the processing circuitry, a present available energy in the electrical energy storage system with the energy required to provide the pulse power for the duration of the ascent time, e) repeating, by the processing circuitry, steps a-d with reduced updated ascent speed until the present available energy in the electrical energy storage system is equal to or exceeds the energy required to provide the pulse power for the duration of the ascent time, outputting, by the processing circuitry, the pulse power, and the ascent time as the pulse time.

Example 13: The method of example 13, further comprising: evaluating, by the processing circuitry, whether the ascent power exceeds the accumulated maximum available fuel cell system power and available continuous electrical energy storage system power, and only perform the iterative calculation when the ascent power exceeds the accumulated available fuel cell system power and available continuous electrical energy storage system power.

Example 14: The method of any of examples 10-13, wherein the speed adjusting device is an auxiliary brake device that provides auxiliary brake capacity to the host vehicle, and the upcoming power event is a descent event whereby the total power is the vehicle brake power required to maintain the target speed during the upcoming descent.

Example 15: The method of example 14, further comprising: calculating, by the processing circuitry, the vehicle brake power based on an inclination of the descent event derived from the terrain data, a present vehicle weight, and the target speed, determining, by the processing circuitry, that the calculated vehicle brake power exceeds a vehicle rated brake power, wherein the vehicle rated brake power is used as target brake power, wherein to calculate iteratively includes: a) calculating, by the processing circuitry, a descent time based on the descent length and an updated descent speed below the target speed, b) calculating, by the processing circuitry, a pulse power based on an estimated available energy difference in the electrical energy storage device between start of the descent and end of the descent, and the descent time, c) calculating, by the processing circuitry, a needed auxiliary brake power based on a difference between the target brake power and the pulse power, d) comparing, by the processing circuitry, the calculated needed auxiliary brake power with the auxiliary brake capacity, e) repeating, by the processing circuitry, steps a-d with reduced updated descent speed until the needed auxiliary brake power does not exceed the auxiliary brake capacity, outputting, by the processing circuitry, the pulse power, and the descent time as the pulse time.

Example 16: The method of example 15, where to calculate the needed auxiliary brake power further includes adding a fuel cell idle power presently available.

Example 17: The method of any of examples 10-16, wherein the target speed is the legal speed limit at the upcoming power event.

Example 18: The method of any of examples 10-17, wherein the thermal limit is a temperature selected above which unwanted rapid degradation of the electrical energy storage system occurs.

Example 19: A computer program product comprising program code for performing, when executed by the processing circuitry, the method of any of examples 10-18.

Example 20: A non-transitory computer-readable storage medium comprising instructions, which when executed by the processing circuitry, cause the processing circuitry to perform the method of any of examples 10-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) comprising processing circuitry (102) configured to:
acquire terrain data (104) of an upcoming power event for a host vehicle (105),
calculate a total power (106) required for traveling through the upcoming power event provided a target speed for the host vehicle,
calculate, by adjusting a speed parameter (108) for the host vehicle at the upcoming power event, a pulse power (110) and pulse time (111) available in the electrical energy storage system (114) of the host vehicle to assist a speed adjusting device (116) of the host vehicle during the upcoming power event to reach the total power,
calculate a recovery time window (118) prior to the upcoming power event that allows the electrical energy storage system (114) to provide the pulse power and pulse time at the upcoming power event with the constraint that a thermal limit of the electrical energy storage system at the end of the upcoming power event is not exceeded,
provide an output (120) including the recovery time window, the pulse power, and the pulse time.

2. The computer system of claim 1, wherein the speed adjusting device is a fuel cell system that provides propulsion power to the host vehicle, and the upcoming power event is an ascent event whereby the total power is the ascent power required to climb the ascent event.

3. The computer system of claim 2, wherein the processing circuitry is further configured to:
calculate the ascent power based on an inclination of the ascent event derived from the terrain data, a present vehicle weight, and the target speed,
determine that the ascent power exceeds the accumulated available fuel cell system power and available continuous electrical energy storage system power, wherein to calculate the pulse power (110) and the pulse time (111) includes an iterative calculation comprising:
a) calculate an updated ascent power based on the inclination of the ascent event, the present vehicle weight, and an ascent speed below the target speed,
b) calculate the pulse power as the difference between the updated ascent power and the available fuel cell system power,
c) calculate the ascent time based on an ascent length derived from the terrain data and the updated ascent speed,
d) compare a present available energy in the electrical energy storage system with the energy required to provide the pulse power for the duration of the ascent time,
e) repeat steps a-d with reduced updated ascent speed until the present available energy in the electrical energy storage system is equal to or exceeds the energy required to provide the pulse power for the duration of the ascent time,
output the pulse power, and the ascent time as the pulse time.

4. The computer system of claim 3, wherein the processing circuitry is further configured to:
evaluate whether the ascent power exceeds the accumulated maximum available fuel cell system power and available continuous electrical energy storage system power, and
only perform the iterative calculation when the ascent power exceeds the accumulated available fuel cell system power and available continuous electrical energy storage system power.

5. The computer system of any of claims 1-3, wherein the speed adjusting device is an auxiliary brake device that provides auxiliary brake capacity to the host vehicle, and the upcoming power event is a descent event whereby the total power is the vehicle brake power required to maintain the target speed during the upcoming descent.

6. The computer system of claim 5, wherein the processing circuitry is further configured to:
calculate the vehicle brake power based on an inclination of the descent event derived from the terrain data, a present vehicle weight, and the target speed,
determine that the vehicle brake power exceeds a vehicle rated brake power, wherein the vehicle rated brake power is used as target brake power, and to calculate the pulse power (110) and the pulse time (111) includes an iterative calculation including comprising:
a) calculate a descent time based on the descent length and an updated descent speed below the target speed,
b) calculate a pulse power based on an estimated available energy difference in the electrical energy storage device between start of the descent and end of the descent, and the descent time,
c) calculate a needed auxiliary brake power based on a difference between the target brake power and the pulse power,
d) compare the calculated needed auxiliary brake power with the auxiliary brake capacity,
e) repeat steps a-d with reduced updated descent speed until the needed auxiliary brake power does not exceed the auxiliary brake capacity,
output the pulse power, and the descent time as the pulse time.

7. The computer system of claim 6, wherein to calculate the needed auxiliary brake power further includes adding a fuel cell idle power presently available.

8. A vehicle comprising the computer system of any of claims 1-7.

9. A computer-implemented method, comprising:
acquiring (S102), by processing circuitry of a computer system, terrain data of an upcoming power event for a host vehicle,
calculating (S104), by the processing circuitry, a total power required for traveling through the upcoming power event provided a target speed for the host vehicle,
calculating (S106), by the processing circuitry, by adjusting a speed parameter for the host vehicle at the upcoming power event, a pulse power and pulse time available in the electrical energy storage system of the host vehicle to assist a speed adjusting device of the host vehicle during the upcoming power event to reach the total power,
calculating (S108), by the processing circuitry, a recovery time window prior to the upcoming power event that allows the electrical energy storage system to provide the pulse power and pulse time at the upcoming power event with the constraint that a thermal limit of the electrical energy storage system at the end of the upcoming power event is not exceeded,
providing (S110), by the processing circuitry, an output including the recovery time window, the pulse power, and the pulse time.

10. The method of claim 9, wherein the speed adjusting device is a fuel cell system that provides propulsion power to the host vehicle, and the upcoming power event is an ascent event whereby the total power is the ascent power required to climb the ascent event.

11. The method of claim 10, further comprising:
calculating (S202), by the processing circuitry, the ascent power based on an inclination of the ascent event derived from the terrain data, a present vehicle weight, and the target speed,
determining (S204), by the processing circuitry, that the ascent power exceeds the accumulated available fuel cell system power and available continuous electrical energy storage system power, wherein to calculate the pulse power and pulse time includes an iterative calculation comprising:
a) calculating (S206), by the processing circuitry, an updated ascent power based on the inclination of the ascent event, the present vehicle weight, and an ascent speed below the target speed,
b) calculating (S208), by the processing circuitry, the pulse power as the difference between the updated ascent power and the available fuel cell system power,
c) calculating (S210), by the processing circuitry, the ascent time based on an ascent length derived from the terrain data and the updated ascent speed,
d) comparing (S212), by the processing circuitry, a present available energy in the electrical energy storage system with the energy required to provide the pulse power for the duration of the ascent time,
e) repeating, by the processing circuitry, steps a-d with reduced updated ascent speed until the present available energy in the electrical energy storage system is equal to or exceeds the energy required to provide the pulse power for the duration of the ascent time,
outputting (S214), by the processing circuitry, the pulse power, and the ascent time as the pulse time.

12. The method of any of claims 9-11, wherein the speed adjusting device is an auxiliary brake device that provides auxiliary brake capacity to the host vehicle, and the upcoming power event is a descent event whereby the total power is the vehicle brake power required to maintain the target speed during the upcoming descent.

13. The method of claim 12, further comprising:
calculating (S302), by the processing circuitry, the vehicle brake power based on an inclination of the descent event derived from the terrain data, a present vehicle weight, and the target speed,
determining (S304), by the processing circuitry, that the calculated vehicle brake power exceeds a vehicle rated brake power, wherein the vehicle rated brake power is used as target brake power, wherein to calculate the pulse power and pulse time includes an iterative calculation comprising:
a) calculating (S306), by the processing circuitry, a descent time based on the descent length and an updated descent speed below the target speed,
b) calculating (S308), by the processing circuitry, a pulse power based on an estimated available energy difference in the electrical energy storage device between start of the descent and end of the descent, and the descent time,
c) calculating (S310), by the processing circuitry, a needed auxiliary brake power based on a difference between the target brake power and the pulse power,
d) comparing (S312), by the processing circuitry, the calculated needed auxiliary brake power with the auxiliary brake capacity,
e) repeating, by the processing circuitry, steps a-d with reduced updated descent speed until the needed auxiliary brake power does not exceed the auxiliary brake capacity,
outputting (S314), by the processing circuitry, the pulse power, and the descent time as the pulse time.

14. A computer program product comprising program code for performing, when executed by the processing circuitry, the method of any of claims 9-13.

15. A non-transitory computer-readable storage medium comprising instructions, which when executed by the processing circuitry, cause the processing circuitry to perform the method of any of claims 9-13.
